# FASCICULE DE BREVET EUROPEEN

(11) **EP 1 481 839 B1**
(45) Date de publication et mention de la délivrance du brevet: **30.08.2006**
(21) Numéro de dépôt: 04300276.5
(22) Date de dépôt: 13.05.2004
(51) Int. Cl.: B60N 2/22, B60N 2/36

(54) **Vehicule automobile comportant une banquette arrière inclinable**
Kraftfahrzeug mit einer neigbaren hinteren Sitzbank.
Automotive vehicle provided with a reclinable rear bench.

(30) Priorité: 16.05.2003 FR 0305909
(43) Date de publication de la demande: 01.12.2004
(73) Titulaire: Renault s.a.s., 92100 Boulogne Billancourt (FR)
(72) Inventeur: Mazieres, Laurent, 75017 Paris (FR)

(56) Documents cités:
- EP-A- 0 741 055
- DE-C- 4 343 108
- FR-A- 2 388 693
- FR-A- 2 524 285
- FR-A- 2 786 139

## Description

L'jnvention concerne un véhicule automobile comportant une banquette arrière inclinable.

L'invention concerne plus particulièrement un véhicule automobile comportant une banquette arrière inclinable, qui est agencée en avant d'un compartiment à bagages, qui comporte une assise montée sur un plancher du véhicule, et dont un dossier articulé dans une partie inférieure sur l'assise comporte dans une partie supérieure des pênes de verrouillage opposés transversalement dont chacun est susceptible de se verrouiller sur au moins une gâche portée par un élément latéral adjacent de structure de caisse du véhicule.

On connaît de nombreux exemples de véhicules automobiles de ce type.

De tels véhicules automobiles permettent de disposer d'un habitacle modulable, par exemple entre une position dans laquelle la banquette arrière, non rabattue, permet d'y asseoir des passagers, et une position rabattue permettant d'agrandir la capacité du compartiment à bagages.

Le document FR-2.388.693 décrit et représente un véhicule de ce type dans lequel l'assise de la banquette est montée coulissante sur le plancher du véhicule et dans lequel le dossier de ladite banquette, articulé dans une partie inférieure sur l'assise, est lié par rapport à l'élément de structure de caisse par l'intermédiaire d'une barre qui est montée pivotante transversalement sur le dos du dossier et dont les extrémités sont coudées de manière à fermer des bielles d'articulation dont les extrémités sont reçues dans des gâches fixes portées par l'élément de structure de caisse du véhicule.

Cette conception permet d'obtenir un débattement du dossier proportionnel à la longueur des extrémités de la barre conformées en bielles, et par conséquent d'autoriser différentes positions d'inclinaison de la banquette arrière.

Toutefois, cette conception présente de nombreux inconvénients.

En effet, la barre étant portée par le dossier de la banquette, elle demeure en saillie du dos du dossier de la banquette, de sorte qu'elle constitue une partie saillante pouvant s'avérer gênante pour le chargement du compartiment à bagages lorsque le dossier de la banquette est rabattu contre son assise.

Les extrémités conformées en bielles sont particulièrement saillantes et peuvent s'accrocher aux objets qui sont chargés dans le compartiment à bagages du coffre.

Une telle conception est par ailleurs exclusivement réservée à un dossier de banquette d'un seul tenant car la barre est fixée sur toute la largeur du dossier. Cette barre est donc incompatible avec une banquette dont le dossier est fractionnable, par moitié ou par tiers, comme cela est courant sur les véhicules actuels.

La barre est également susceptible, en cas de choc violent, et de par sa longueur, de se déformer et de permette aussi un déplacement important du dossier, ce qui peut amener une surcharge sur les passagers arrière qui occupent la banquette.

L'invention propose de remédier à ces inconvénients en proposant une banquette du type décrit précédemment, dont le dossier est susceptible de proposer de multiples possibilités d'inclinaison tout en ne comportant aucun objet saillant susceptible de gêner le chargement lorsque le dossier est rabattu sur l'assise tout en permettant une bonne retenue du dossier en cas de choc.

Dans ce but, l'invention propose un véhicule automobile du type décrit précédemment, caractérisé en ce que les moyens de fixation comportent des pênes de verrouillage opposés transversalement, portés par le dossier, dont chacun est susceptible de se verrouiller sur au moins une gâche associée qui fait partie d'un élément monté mobile dans un plan vertical sur l'élément latéral adjacent de structure de caisse du véhicule pour proposer différents réglages en inclinaison du dossier de la banquette par rapport à son assise.

Selon d'autres caractéristiques de l'invention :
- l'élément mobile comporte au moins, un bras de longueur déterminée dont une extrémité est montée pivotante autour d'un pivot d'axe transversal sur l'élément latéral adjacent de structure de caisse du vehicule et dont l'autre extrémité porte la gâche,
- l'élément mobile comporte deux bras sensiblement perpendiculaires, de longueurs différentes, montés pivotants autour du même axe, et dont les extrémités portent chacune une gâche,
- chaque bras est réalisé à partir d'un fil de section constante en forme de "U", dont les branches parallèles sont portées par une platine qui est montée pivotante autour d'un pivot d'axe transversal sur l'élément latéral adjacent de structure de caisse du véhicule, et dont l'extrémité de jonction des branches forme la gâche associée,
- chaque pêne est conformé sous la forme d'une pince qui est destinée à coopérer avec l'extrémité, de jonction des branches du bras en "U",
- les branches en fil de chaque bras sont montées serrées et/ou soudées dans des perçages de la platine,
- la platine comporte des moyens d'indexation en rotation autour de son pivot.
- la platine est montée à rotation sur l'élément de structure de caisse par l'intermédiaire d'une vis dont une première partie d'une tige est fixée à l'élément de structure de caisse, dont une deuxième partie de la tige reçoit un ressort interposé entre l'élément de structure de caisse et la platine, dont une troisième partie de la tige traverse un perçage de la platine, et dont une tête polygonale immobilise en rotation au moins un méplat de la platine, formé dans un logement de la platine de forme complémentaire de la tête polygonale, dont une extrémité communique- avec le perçage et dont l'autre extrémité débouche à l'extérieur de la platine, de manière qu'une rotation de la platine d'une position angulaire à une autre soit obtenue successivement en comprimant le ressort pour que la tête polygonale de la vis sorte du logement de la platine, puis en pivotant la platine, et enfin en relâchant le ressort pour que la tête de la vis immobilise à nouveau la platine dans une autre position,
- l'élément mobile est dissimulé derrière un revêtement recouvrant l'élément latéral adjacent de structure.
- l'assise de la banquette est montée coulissante sur le plancher du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique latérale d'une partie arrière d'un véhicule selon un état antérieur de la technique.
- la figure 2 est une vue schématique de dessus de la partie arrière du véhicule de la figure 1,
- la figure 3 est une vue schématique latérale d'une partie arrière d'un véhicule réalisé conformément à l'invention,
- la figure 4 est une vue de dessus de la partie arrière du véhicule de la figure 3.
- la figure 5 est une vue latérale de la gâche du véhicule de la figure 4 occupant une première position,
- la figure 6 est une vue latérale de la gâche du véhicule de la figure 4 occupant une deuxième position,
- la figure 7 est une vue en coupe de la gâche passant par son axe de rotation.

Dans la description qui va suivre des chiffres de référence identiques désignent des pièces identiques ou ayant des fonctions similaires.

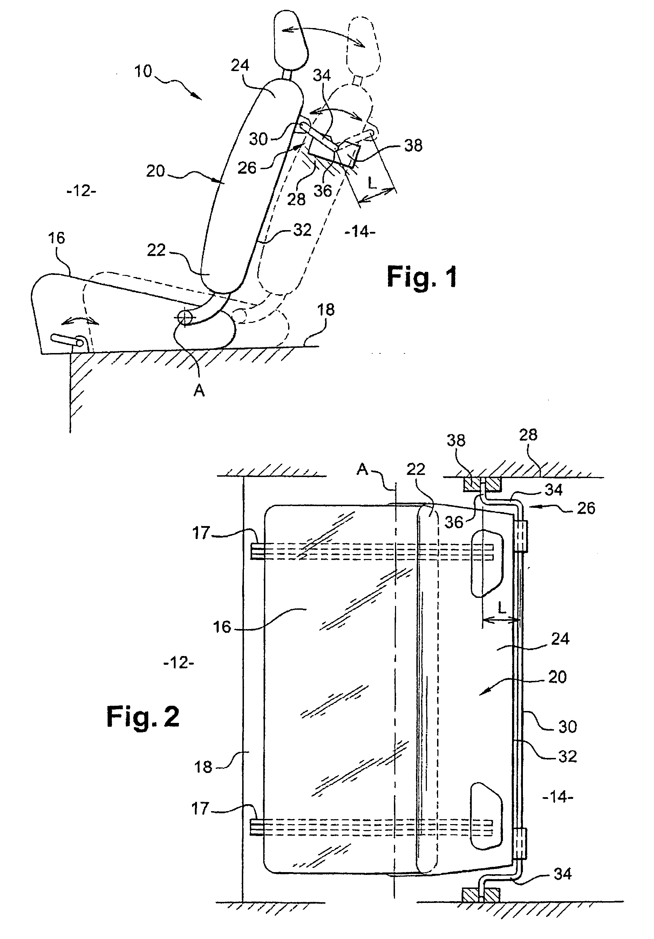

On a représenté aux figures 1 et 2 une partie arrière d'un véhicule automobile comportant une banquette arrière 10 réalisée conformément à un état antérieur de la technique.

De manière connue, la partie arrière du véhicule automobile comporte un habitacle 12 à l'intérieur duquel est agencé une telle banquette 10 arrière, qui est agencée en avant d'un compartiment 14 à bagages.

De manière connue la banquette 10 comporte une assise 16 qui est montée coulissante longitudinalement sur un plancher 18 du véhicule, par exemple par l'intermédiaire de glissières 17, et dont un dossier 20, articulé dans une partie inférieure 22 autour d'un axe, "A" sur l'assise 16 comporte dans une partie supérieure 24 des moyens 26 de fixation à des éléments 28 latéraux adjacents de structure de caisse du véhicule.

De manière connue, ces moyens 28 comportent une barre 30 qui est montée pivotante transversalement sur le dos 32 du dossier 20 et dont les extrémités 34 sont coudées de manière à former des bielles d'articulation dont les extrémités 36 sont reçues dans des gâches 38 fixes portées par l'élément 28 de structure de caisse du véhicule, comme représenté à la figure 1.

Cette conception permet d'obtenir un débattement du dossier 20 proportionnel à la longueur "L" des extrémités 34 conformées en bielle de la barre transversale 30, et par conséquent d'autoriser différentes positions d'inclinaison (non représentées) de la banquette 20 arrière.

Toutefois, cette conception présente l'inconvénient de limiter les positions d'inclinaison du dossier 20, celles-ci étant limitées par la longueur "L" des extrémités 34 de la barre 30 ou par le positionnement des extrémités 36 des extrémités 34 dans différentes gâches.

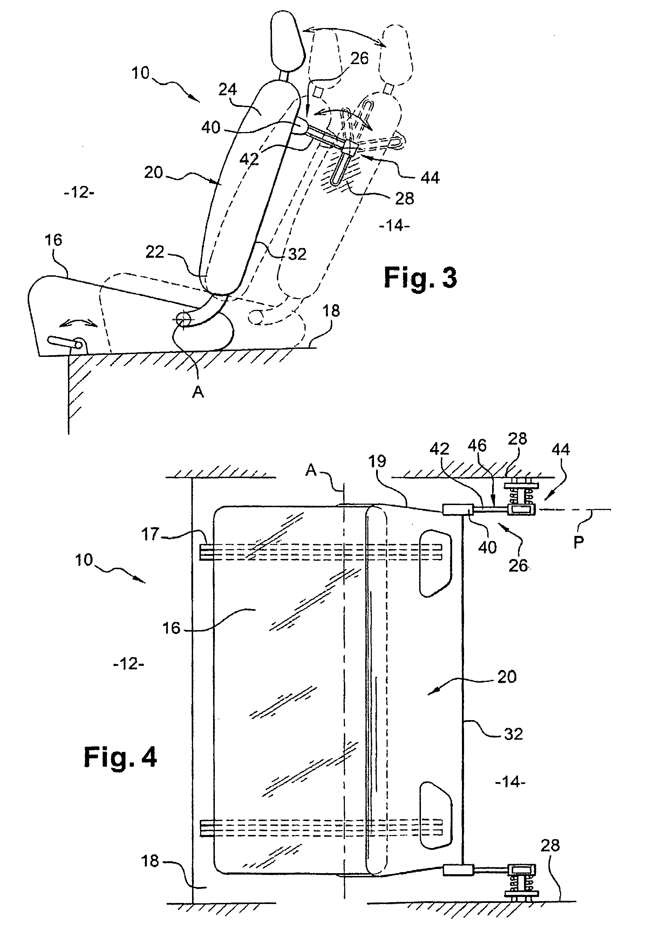

Pour remédier à ces inconvénients, comme l'illustrent les figures 3 et 4, l'invention propose un véhicule automobile comportant une banquette 10 dont l'assise 16 est montée coulissante sur le plancher 18 du véhicule comme décrit précédemment.

En variante, de manière non limitative de l'invention, la banquette 10 pourrait comporter une assise 16 fixée rigidement sur le plancher 18.

Les moyens 26 de fixation du dossier 20 comportent des pênes 40 de verrouillage opposés transversalement, portés par les bords 19 du dossier 20, dont chacun est susceptible de se verrouiller sur au moins une gâche 42 associée qui fait partie d'un élément 44 monté mobile dans un plan "P" vertical sur l'élément 28 latéral adjacent de structure de caisse du véhicule pour proposer différents réglages en inclinaison du dossier 20 de la banquette 10 par rapport à son assise 16.

Cette configuration est particulièrement avantageuse, car les pênes 40 de verrouillage étant portés par les bords 19 du dossier 20, le dos 32 du dossier 20 ne comporte pas d'aspérité nuisant au chargement ni d'élément risquant d'occasionner une lésion aux occupants du véhicule en cas de choc violent.

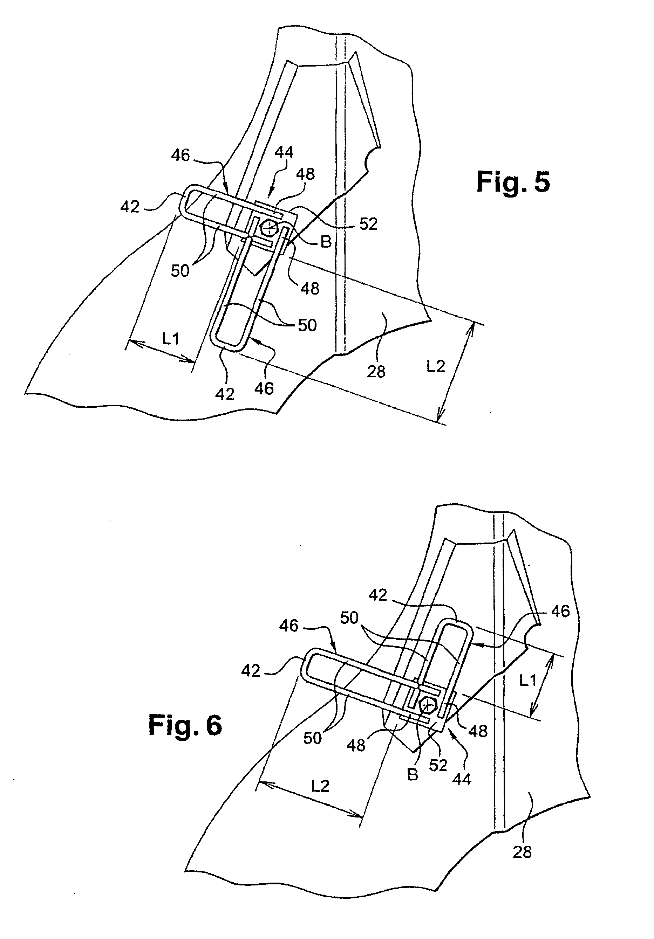

Plus particulièrement, comme l'illustrent les figures 5 à 7, l'élément 44 mobile comporte au moins un bras 46 de longueur déterminée dont une extrémité 48 est montée pivotante autour d'un pivot d'axe transversal "B" sur l'élément 28 latéral adjacent de structure de caisse du véhicule et dont l'autre extrémité porte la gâche 42.

Le pivotement du bras 46 permet donc d'obtenir différentes positions de la gâche 42 et donc plusieurs inclinaisons du dossier 20 de la banquette 10, comme représenté à la figure 3.

Pour accroître encore ces possibilités de réglage, l'élément mobile 44 comporte deux bras 46 sensiblement perpendiculaires, de longueurs "L1" et "L2" différentes, qui sont montés pivotants du même axe "B", et dont les extrémités portent chacune une gâche 42.

Dans le mode de réalisation préféré de l'invention, comme représenté aux figures 5 à 7, chaque bras 46 est réalisé à partir d'un fil de section constante en forme de "U", dont les branches 50 parallèles sont portées par une platine 52 qui est montée pivotante autour d'un pivot 54 d'axe transversal "B" sur l'élément 28 latéral adjacent de structure de caisse du véhicule, et dont l'extrémité de jonction des branches 52 forme la gâche 42 associée.

Cette configuration n'est pas limitative de l'invention et chaque bras 46 pourrait prendre toute forme apte à recevoir un pêne 40 de forme complémentaire.

Dans le cas d'une banquette 10 fixe dont l'assise 16 est fixée au plancher 18 du véhicule, les longueurs "L1" et "L2" des bras permettent avantageusement d'obtenir de manière simple et efficace deux positions d'inclinaison de la banquette 10.

Avantageusement, l'élément mobile 44 peut être au moins en partie dissimulé derrière un revêtement recouvrant l'élément 28 latéral adjacent de structure, par exemple un revêtement tel qu'un panneau de moquette.

Dans cette configuration, chaque pêne 40 est conformé sous la forme d'une pince (non représentée) qui est destinée à coopérer avec l'extrémité 42 de jonction des branches 50 du bras en "U".

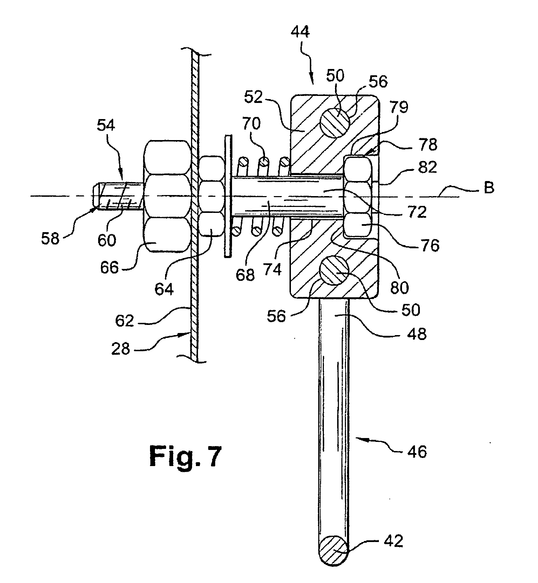

De préférence, comme l'illustre la figure 7, les branches 50 en fil de chaque bras 46 sont montées serrées et/ou soudées dans des perçages 56 de la platine 52.

Pour permettre un positionnement fixe des bras 46 par rapport à la position du dossier 20 de la banquette 10 que l'on désire obtenir, la platine 52 comporte des moyens d'indexation en rotation autour de son pivot 54.

A cet effet, comme l'illustre la figure 7, dans le mode de réalisation préféré de l'invention, la platine 52 est montée à rotation sur l'élément 28 de structure de caisse par l'intermédiaire d'une vis 58 dont une première partie 60 d'une tige est fixée à l'élément 28 de structure de caisse. Par exemple, la première partie 60 de la tige de la vis 58 traverse une paroi 62 de l'élément de structure de caisse du véhicule de part et d'autre de laquelle elle est immobilisée par des écrous 64 et 66.

Par ailleurs, une deuxième partie 68 de la tige reçoit un ressort 70 interposé entre l'élément 28 de structure de caisse et la platine 52. Une troisième partie 72 de la tige traverse un perçage 74 de la platine, et la tête 76 polygonale de la vis est destinée à immobiliser en rotation un logement 78 de la platine 52, de forme sensiblement complémentaire et comportant au moins un méplat 79 destiné à coopérer avec la tête 76 polygonale de la vis, une extrémité 80 du logement 78 communiquant avec le perçage 74 et l'autre extrémité 82 du logement 78 débouchant à l'extérieur de la platine 52.

De cette manière, une rotation de la platine 52 d'une position angulaire à une autre peut être obtenue successivement comme décrit ci-dessous.

En appuyant sur la platine 52 vers l'élément 28 pour comprimer le ressort 70, la tête polygonale 76 de la vis 58 sort du logement 78 de la platine 52. Il est alors possible de pivoter la platine 52. Ensuite, en relâchant la pression sur la platine 52, celle-ci est rappelée par le ressort 70 qui se relâche. La tête 76 de la vis 58 peut alors à nouveau immobiliser le méplat 79 dans le logement 78 dans une autre position angulaire.

On remarquera que, dans le mode réalisation préféré de l'invention, la tête 76 de la vis est hexagonale et offre ainsi six postions angulaires différences, mais cette disposition n'est aucunement limitative de l'invention. La tête 76 de la vis 58 peut comporter un nombre supérieur ou inférieur de pans pour proposer un différent de positions.

D'une manière analogue, le logement 78 comporte six méplats 79 disposés selon une disposition à six pans creux, complémentaire de la tête 76 hexagonale de la vis 58. Il sera compris que le logement pourrait lui aussi comporter un nombre inférieur de méplats, c'est à dire au moins, un méplat 79 destiné à coopérer avec une face de la tête de la vis 76 afin d'immobiliser l'élément mobile 44,

L'invention permet donc d'obtenir une banquette 10 dont le dossier 20, inclinable selon de multiples positions, est de surcroît exempt de parties saillantes qui gênent le chargement et/ou qui nuisent à la sécurité des occupants du véhicule.

## Revendications

1. Véhicule automobile comportant une banquette arrière (10) inclinable, qui est agencée en avant d'un compartiment (14) à bagages, qui comporte une assise (16) montée sur un plancher (18) du véhicule, et dont un dossier (20) articulé dans une partie inférieure (22) sur l'assise comporte dans une partie supérieure (24) des moyens (25) de fixation à des éléments latéraux (28) adjacents de structure de caisse du véhicule,
**caractérisé en ce que** les moyens (26) de fixation comportent des pènes (40) de verrouillage opposés transversalement, portés par les bords (19) du dossier (20), dont chacun est susceptible de se verrouiller sur au moins une gâche (42) associée qui fait partie d'un élément (44) monté mobile dans un plan (P) vertical sur l'élément (28) latéral adjacent de structure de caisse du véhicule pour proposer différents réglages en inclinaison du dossier (20) de la banquette (10) par rapport à son assise (16).

2. Vehicule automobile selon la revendication précédente, **caractérisé en ce que** l'élément (44) mobile comporte au moins un bras (46) de longueur (L1, L2) déterminée dont une extrémité (48) est montée pivotante autour d'un pivot d'axe (B) transversal sur l'élément (28) latéral adjacent de structure de caisse du véhicule et dont l'autre extrémité porte la gâche (42).

3. Véhicule automobile selon la revendication précédente, **caractérisé en ce que** l'élément (44) mobile comporte deux bras (46) sensiblement perpencticulaires, de longueurs (L1, L2) différentes, montés pivotants autour du même axe (B), et dont les extrémités portent chacune une gâche (42).

4. Véhicule automobile selon l'une quelconque des revendications 2 ou 3, **caractérisé en ce que** chaque bras (46) est réalisé a partir d'un fil de section constante en forme de "U", dont les branches (50) parallèles sont portées par une platine (52) qui est montée pivotante autour d'un pivot (54) d'axe (B) transversal sur l'élément (28) latéral adjacent de structure de caisse du véhicule et dont l'extrémité de jonction des branches (50) forme la gâche (42) associée.

5. Véhicule automobile selon la revendication précédente, **caractérisé en ce que** chaque pêne (40) est conforme sous la forme d'une pince qui est destinée à coopérer avec l'extrémité de jonction des branches (50) du bras (46) en ''U",

6. Véhicule automobile selon l'une des revendications 4 ou 5, **caractérisé en ce que** les branches (60) en fil de chaque bras sont montées serrées et/ou soudées dans des perçages (56) de la platine (52).

7. Véhicule automobile selon l'une des revendications 4 à 6, **caractérisé en ce que** la platine (52) comporte des moyens d'indexation en rotation autour de son pivot (54).

8. Véhicule automobile selon la revendication précédente, **caractérisé en ce que** la platine (52) est montée à rotation sur l'élément (28) de structure de caisse par l'intermédiaire d'une vis (58) dont une première partie (60) d'une tige est fixée à l'élément (28) de structure de caisse, dont une deuxième partie (68) de la tige reçoit un ressort (70) interposé entre l'élément (28) de structure de caisse et la platine (52), dont une troisième partie (72) de la tige traverse un perçage (74) de la platine (52), et dont une tête polygonale (76) immobilise en rotation au moins un méplat (79) de la platine, formé dans un logement (78) de la platine de forme sensiblement complémentaire de la tête polygonal, dont une extrémité (80) communique avec le perçage (74) et dont l'autre extrémité (62) débouche à l'extérieur de la platine (52), de manière qu'une rotation de la platine (52) d'une position angulaire à une autre soit obtenue successivement en comprimant le ressort (70) pour que la tête (76) polygonale de la vis (58) sorte du logement (78) de la platine (52), puis en pivotant la platine (52), et enfin en relâchant le ressort (70) pour que la tête (76) de la vis immobilise à nouveau la platine (52) dans une autre position.

9. Vehicule automobile selon l'une quelconque des revendications 1 à 8, **caractérisé en ce que** l'élément mobile (44) est dissimulé derrière un revêtement recouvrant l'élément (28) latéral adjacent de structure.

10. Véhicule automobile selon l'une quelconque des revendications précédentes, **caractérisé en ce que** l'assise (16) de la banquette (10) est montée coulissante sur le plancher (18) du véhicule.

## Claims

1. Motor vehicle comprising a tiltable rear seat (10), that is arranged in front of a luggage compartment (14), that comprises a squab (16) mounted on a floor (18) of the vehicle, and of which a back (20) articulated in a bottom part (22) on the squab comprises, in a top part (24), means (26) of attachment to the vehicle's bodywork structure adjacent side elements (28),
**characterized in that** the means (26) of attachment comprise transversely opposed locking latches (40), supported by the edges (19) of the back (20), each of which is capable of being locked onto at least one associated catch (42) that forms part of an element (44) mounted movably in a vertical plane (P) on the vehicle's bodywork structure adjacent side element (28) to offer different tilting adjustments of the back (20) of the seat (10) relative to its squab (16).

2. Motor vehicle according to the preceding claim, **characterized in that** the movable element (44) comprises at least one arm (46) of determined length (L1, L2) of which one end (48) is mounted so as to pivot about a transverse axis pivot (B) on the vehicle's bodywork structure adjacent side element (28) and of which the other end supports the catch (42).

3. Motor vehicle according to the preceding claim, **characterized in that** the movable element (44) comprises two substantially perpendicular arms (46) of different lengths (L1, L2), mounted so as to pivot about the same axis (B) and whose ends each support a catch (42).

4. Motor vehicle according to either one of Claims 2 or 3, **characterized in that** each arm (46) is made from a U-shaped wire of constant section, whose parallel branches (50) are supported on a plate (52) that is mounted so as to pivot about a pivot (54) with a transverse axis (B) on the vehicle's bodywork structure adjacent side element (28), and whose joining end of the branches (50) forms the associated catch (42).

5. Motor vehicle according to the preceding claim, **characterized in that** each latch (40) is shaped in the shape of a pair of tongues that is designed to interact with the joining end of the branches (50) of the U-shaped arm (46).

6. Motor vehicle according to one of Claims 4 or 5, **characterized in that** the branches (50) of wire of each arm are mounted clamped and/or welded in drill holes (56) of the plate (52).

7. Motor vehicle according to one of Claims 4 to 6, **characterized in that** the plate (52) comprises indexation means in rotation about its pivot (54).

8. Motor vehicle according to the preceding claim, **characterized in that** the plate (52) is mounted rotatably on the bodywork structure element (28) by means of a screw (58) of which a first part (60) of a stem is attached to the bodywork structure element (28), of which a second part (68) of the stem receives a spring (70) interposed between the bodywork structure element (28) and the plate (52), of which a third part (72) of the stem traverses a drill hole (74) of the plate (52), and of which a polygonal head (76) stops the rotation of at least one flat (79) of the plate, formed in a housing (78) of the plate shaped substantially to match the polygonal head, one end (80) of which communicates with the drill hole (74) and the other end (82) of which opens to the outside of the plate (52), so that a rotation of the plate (52) from one angular position to another is achieved successively by compressing the spring (70) so that the polygonal head (76) of the screw (58) comes out of the housing (78) of the plate (52), then by pivoting the plate (52), and finally by releasing the spring (70) so that the head (76) of the screw again stops the plate (52) in another position.

9. Motor vehicle according to any one of Claims 1 to 8, **characterized in that** the movable element (44) is hidden behind a housing covering the structure adjacent side element (28).

10. Motor vehicle according to any one of the preceding claims, **characterized in that** the squab (16) of the seat (10) is mounted so as to slide on the floor (18) of the vehicle.

## Patentansprüche

1. Kraftfahrzeug mit einer neigbaren hinteren Sitzbank (10), die vor einem Gepäckraum (14) angeordnet ist, umfassend eine Sitzfläche (16), die auf einem Boden (18) des Fahrzeugs befestigt ist, und deren Rückenlehne (20), die durch ein Gelenk in ihrem Unterteil (22) mit der Sitzfläche verbunden ist, in ihrem Oberteil Mittel (25) zur Befestigung an benachbarte Seitenelemente (28) der Karosseriestruktur des Fahrzeugs umfasst,
**dadurch gekennzeichnet, dass** die Befestigungsmittel (26) sich quer gegenüberliegende Schlossriegel (40) umfassen, die von den Kanten (19) der Rückenlehne (20) getragen werden, wovon jeder geeignet ist, sich auf mindestens einem zugehörigen Schließhaken (42) zu verriegeln, der Teil eines Elements (44) ist, das auf dem benachbarten Seitenelement (28) der Karosseriestruktur des Fahrzeugs in einer Ebene (P) vertikal beweglich befestigt ist, um verschiedene Neigungseinstellungen der Rückenlehne (20) der Sitzbank (10) in Bezug auf ihre Sitzfläche (16) zu ermöglichen.

2. Kraftfahrzeug nach dem vorhergehenden Anspruch, **dadurch gekennzeichnet, dass** das bewegliche Element (44) mindestens einen Arm (46) mit bestimmter Länge (L1, L2) umfasst, dessen eines Ende (48) um einen Querachszapfen (B) auf dem benachbarten Seitenelement (28) der Karosseriestruktur des Fahrzeugs drehbar befestigt ist und dessen anderes Ende den Schließhaken (42) trägt.

3. Kraftfahrzeug nach dem vorhergehenden Anspruch, **dadurch gekennzeichnet, dass** das bewegliche Element (44) zwei im Wesentlichen rechtwinklige Arme (46) mit verschiedenen Längen (L1, L2) umfasst, die um die gleiche Achse (B) drehbar befestigt sind und deren Enden jedes einen Schließhaken (42) tragen.

4. Kraftfahrzeug nach einem der Ansprüche 2 oder 3, **dadurch gekennzeichnet, dass** jeder Arm (46) aus einem U-förmigen Draht mit konstantem Querschnitt besteht, dessen parallele Zweige (50) von einer Platte (52) getragen werden, die auf um einen Zapfen (54) der Querachse (B) drehbare Weise auf dem benachbarten Seitenelement (28) der Karosseriestruktur des Fahrzeugs befestigt ist, und dessen Zweigverbindungsende (50) den zugehörigen Schließhaken (42) formt.

5. Kraftfahrzeug nach dem vorhergehenden Anspruch, **dadurch gekennzeichnet, dass** jeder Schlossriegel (40) in Form einer Zange vorgesehen ist, die dazu bestimmt ist, mit dem Zweigverbindungsende (50) des U-förmigen Arms (48) zusammenzuwirken.

6. Kraftfahrzeug nach einem der Ansprüche 4 oder 5, **dadurch gekennzeichnet, dass** die Drahtzweige (50) jedes Arms durch Schrauben und/oder Schweißen in Bohrungen (56) der Platte (52) befestigt sind.

7. Kraftfahrzeug nach einem der Ansprüche 4 bis 6, **dadurch gekennzeichnet, dass** die Platte (52) Indexierungsmittel für die Drehung um ihren Zapfen (54) umfasst.

8. Kraftfahrzeug nach dem vorhergehenden Anspruch, **dadurch gekennzeichnet, dass** die Platte (52) auf drehbare Weise auf dem benachbarten Strukturelement (28) der Karosserie befestigt ist, über eine Schraube (58), deren erster Schaftabschnitt (60) mit dem Element (28) der Karosseriestruktur befestigt ist, deren zweiter Schaftabschnitt (68) eine Feder (70) aufnimmt, die zwischen dem Element (28) der Karosseriestruktur und der Platte (52) angeordnet ist, deren dritter Schaftabschnitt (72) durch eine Bohrung (74) der Platte (52) geht und deren vieleckiger Kopf (76) mindestens eine Fläche (79) der Platte in der Drehrichtung feststellt, die in einer Aufnahme (78) der Platte mit einer Form geformt ist, die im wesentlichen komplementär zum vieleckigen Kopf ist, deren eines Ende (80) mit der Bohrung (74) in Verbindung ist und deren anderes Ende (82) aus der Platte (52) austritt, so dass eine Drehung der Platte (52) aus einer Winkelstellung in eine andere erreicht wird, indem nacheinander die Feder (70) komprimiert wird, damit der vieleckige Kopf (76) der Schraube (58) aus der Aufnahme (78) der Platte (52) austritt, dann die Platte (52) gedreht wird und schließlich die Feder (70) losgelassen wird, damit der Kopf (76) der Schraube wieder in einer anderen Stellung in der Platte (52) festgestellt wird.

9. Kraftfahrzeug nach einem der Ansprüche 1 bis 8, **dadurch gekennzeichnet, dass** das bewegliche Element (44) hinter einer Verkleidung verborgen ist, die das benachbarte Seitenelement (28) der Struktur bedeckt.

10. Kraftfahrzeug nach einem der vorhergehenden Ansprüche, **dadurch gekennzeichnet, dass** die Sitzfläche (16) der Sitzbank (10) auf dem Boden (18) des Fahrzeugs verschiebbar montiert ist.
